# EUROPEAN PATENT SPECIFICATION

(11) **EP 2 329 549 B1**
(45) Date of publication and mention of the grant of the patent: **21.05.2014**
(21) Application number: 09807003.0
(22) Date of filing: 29.04.2009
(51) Int. Cl.: H01M 2/16

(54) **DEVICES AND METHODS FOR LEAD ACID BATTERIES**
VORRICHTUNGEN UND VERFAHREN FÜR BLEISÄUREBATTERIEN
DISPOSITIFS ET PROCÉDÉS POUR DES ACCUMULATEURS AU PLOMB-ACIDE

(30) Priority: 14.08.2008 US 88911 P
(43) Date of publication of application: 08.06.2011
(73) Proprietor: AIC Blab Company, Reno, NV 89501 (US); Lev, Frank, Thornhill, Toronto L3T1R5 (CA); Clarke, Robert Lewis, Orinda, CA 94563 (US); Rabinovich, Leonid, Thornhill, Toronto L4J 7Z5 (CA)
(72) Inventor: CLARKE, Robert, Lewis, Orinda, CA 94563 (US); LEV, Frank, Thornhill, Toronto L3T1R5 (CA); RABINOVICH, Leonid, Thornhill, Toronto L4J7Z5 (CA)
(74) Representative: Lane, Cathal Michael
(86) International application number: PCT/US2009/042122
(87) International publication number: WO 2010/019291

(56) References cited:
- WO-A1-2004/021478
- WO-A1-2007/073279
- WO-A2-2007/080456
- US-A- 4 098 967
- US-A- 5 501 818
- US-A1- 2005 271 947

## Description

This application claims priority to our copending U.S. provisional application with the serial number 61/088911, which was filed August 14, 2008.

### Field of The Invention

The field of the invention is energy storage devices, and more particularly bipolar lead acid batteries (BLAB) and valve regulated bipolar lead acid batteries (VR-BLAB).

### Background of The Invention

The general concept of bipolar lead acid batteries is well known for several decades, and the first operable batteries made from single lead sheets were reported by Peter Kapitsa in the 1930's. Despite their apparent simplicity, bipolar thin film batteries provide numerous significant advantages. For example, as the internal path length is relatively short and as the electrode area relatively large, internal resistance is typically very low, resulting in rapid charge and discharge cycles at minimal heat generation. It is these and other advantages that make bipolar lead acid batteries attractive for hybrid vehicles and regenerative braking systems on automobiles and locomotives. Moreover, due to their bipolar configuration, the weight is reduced and production is simplified.

However, several drawbacks have so far prevented widespread use of bipolar lead acid batteries. Among other things, lead is a fairly poor construction material as it creeps under load (*i.e*., a sheet of lead will slump under its own weight unless attached to a stronger support such as steel), and extra material is often needed to support the lead resulting in an increased weight. Still further, creeping of lead typically leads to surface cracking and formation of crevices, which will in most cases accelerate corrosion (stress corrosion).

To reduce the overall weight of a bipolar electrode, a non-conductive carrier material can be used to which the active electrode material can then be applied as described, for example, in EP 0 607 620 where a plastic honeycomb structure was filled with lead, or in EP 0 848 442 where two opposing and electrically connected webbings were arranged on either side of a non-conductive plastic plate. Similarly, as taught in U.S. Pat. No. 5,126,218, electrically conductive plugs comprising sub-stoichiometric titanium dioxide materials were used to provide a non-conductive light-weight carrier with conductive pathways connecting both sides of the carrier, while U.S. Pat. No. 3,819,412 teaches use of lead clamps for the same purpose. Alternatively, it was described to directly incorporate conductive materials into an otherwise non-conductive polymeric plate to so form a bipolar electrode as described in GB 2 371 402. While such electrode configurations advantageously increase the potential capacity/weight ratio, several drawbacks nevertheless remain.

For example, anodic corrosion of lead is a common failure mode for conventional lead acid batteries and well known to the person of ordinary skill in the art. Examination often reveals fractures of the supporting grids along stress corrosion cracks. When the lead grid fractures, active material is typically dislodged from the grid and accumulates in the mud space at the bottom of the cells, eventually forming a bridge that causes short circuits in the cells. To overcome such problems, large industrial lead electrodes (*e.g*., as those used in commercial electrosynthesis) often use steel plates inserted and welded to the lead sheets to eliminate creep. Such electrodes advantageously increase lifetime of the electrochemical device in strong sulfuric acid and often delay or even prevent stress corrosion. However, such configurations are typically not desirable for bipolar lead acid batteries due to the substantial weight and dimensional requirements.

Furthermore, one of the major factors contributing to failure of lead acid batteries with bipolar electrodes is the migration of electrolyte through a seal around the edges of the bipolar electrode (bipole), which is typically driven by the Marangoni effect. This sealing problem is especially persistent on the positive side of the bipole which has turned out to be virtually impossible to seal in a reliable and permanent fashion. In such failure event, the electrolyte creates a conductive bridge between the positive and negative sides of the bipole, and numerous attempts have been undertaken to more tightly seal the bipole. However, due to many factors, and especially thermal expansion, the Marangoni effect, and the relatively aggressive environment in lead acid batteries, such attempts have not yielded satisfactory results. Still further, the positive electrode material tends to shed over time and accumulate in the space below the electrode, ultimately leading to short circuits and battery malfunction.

Therefore, there is still an unmet need to provide improved battery configurations and methods to improve life time and cycle characteristics in lead acid batteries, and especially bipolar lead acid batteries.

### Summary of the Invention

The present invention is directed to various BLAB configurations and methods that overcome numerous disadvantages of heretofore known BLABs. More specifically, the BLABs presented herein comprise a compression resistant separator that retains the electrolyte in a gelled form, which not only allows for substantial compression of the cell stack (thus eliminating shedding of positive active materials), but also allows for operation of the BLAB without problems associated with electrolyte migration (even where the bipole fails to have any seal to protect against solvent migration). Still further, as the electrodes in preferred BLABs are configured as quasi-bipolar electrodes, problems otherwise associated with pinhole defects in the electrode are avoided and power-to-weight ratio is substantially increased.

In one exemplary aspect of the inventive subject matter, a bipolar lead acid battery includes a first and a second bipolar electrode that are separated by a compression resistant separator that further includes an electrolyte in a gelled form. Most preferably, the separator comprises pyrogenic silica and an inert filler material, and/or the electrolyte is gelled to a degree sufficient to allow operation of the battery without sealing of a cell formed by the bipolar electrodes. In still further preferred aspects, the cell comprises a void space between the bipolar electrodes and a thermally conductive material is disposed in at least part of the void space to help dissipate heat from within the electrode stack. Moreover, it is generally preferred that a one-way valve (e.g., duckbill valve) is coupled to the cell to thereby allow venting of a gas from the cell.

Additionally, it is preferred that at least one of the electrodes in contemplated bipolar batteries is a quasi-bipolar electrode. For example, suitable quasi-bipolar electrodes comprise a non-conductive carrier with openings formed in the carrier, wherein a conductive material is disposed in at least some of the openings, and wherein thin lead foils are laminated to both surfaces of the electrode.

Therefore, in another exemplary aspect of the inventive subject matter, a bipolar lead acid battery includes a quasi-bipolar electrode having a non-conductive carrier with a plurality of openings formed between a first and a second surface of the carrier. A conductive material is disposed in the plurality of openings, and a first and a second lead foil are coupled to the first and second surfaces, respectively. Most preferably, a layer of positive active material is coupled to the first foil, and a layer of negative active material coupled to the second foil, wherein the layer of negative active material may further comprise a compression resistant spacer structure. It is still further contemplated that in such batteries a first and a second compression resistant separator are coupled to the layer of positive active material and the layer of negative active material, respectively, wherein first and second compression resistant separators comprise the electrolyte in a gelled form.

While not limiting to the inventive subject matter, it is typically preferred that the non-conductive carrier is manufactured from a synthetic polymer and/or a ceramic material, and that the conductive material comprises lead. Similarly, it is generally preferred that the spacer structure is made from a synthetic polymer and/or a ceramic. With respect to the compression resistant separators, it is typically preferred that the separator material includes pyrogenic silica and an inert filler material. Furthermore, and where a second quasi-bipolar electrode is coupled to the quasi-bipolar electrode to form a cell, the battery may also include a one-way valve to allow venting of a gas from the cell, and/or a thermally conductive material disposed in at least part of a void space formed in the cell.

Therefore, and viewed from another perspective, the inventors contemplate a method of reducing migration of an electrolyte in a battery in which a compression resistant separator that comprises an electrolyte in a gelled form is placed between a positive active material of a first bipolar electrode and a negative active material of a second bipolar electrode. The first and second bipolar electrodes and the separator are then aligned to form a cell of the battery, and mechanical pressure of at least 10 kPa (most preferably between 20 kPa to 150 kPa) is applied to the first and second electrodes.

As before, it is generally preferred that the bipolar electrode is configured as a quasi-bipolar electrode, and particularly such that the bipolar electrode comprises a carrier having a first and a second surface, and a first and a second lead foil coupled to the first and second surfaces, respectively. It is still further preferred that the compression resistant separator comprises pyrogenic silica and an inert filler material, and that the negative active material further comprises a compression resistant spacer structure. Additionally, the cell may have a void space between the first and second bipolar electrodes, which is preferably filled with a thermally conductive material. Furthermore, and where desired, a one-way valve may be coupled to the cell to thereby allow venting of gas from the cell.

Various objects, features, aspects and advantages of the present invention will become more apparent from the following detailed description of preferred embodiments of the invention.

### Brief Description of the Drawing

Figure 1 is a photograph of one exemplary VR-BLAB according to the inventive subject matter.
Figure 2 is a schematic illustration of a VR-BLAB according to the inventive subject matter.
Figure 3A is a schematic illustration of different views of a quasi-bipolar electrode according to the inventive subject matter.
Figure 3B is a schematic illustration of different views of a detail of a quasi-bipolar electrode according to the inventive subject matter.
Figure 4 is a graph indicating pulse performance of a battery according to the inventive subject matter.
Figures 5A-5C are tables illustrating data for charge/discharge cycles of BLABs and a comparative example.

### Detailed Description

According to the present invention a bipolar lead acid battery, and most preferably a valve regulated BLAB, is constructed in a way that solves the heretofore known problems of bipole leakage, stress corrosion, and relatively high weight in a simple and elegant manner.

In especially preferred methods and devices, the separator of the batteries comprises a material that gels the electrolyte and so prevents leakage around the bipole. Most preferably, such separators are configured to withstand compression to still further improve operational parameters of the battery. Where desired, contemplated batteries will also include a quasi-bipole electrode in which a (typically non-conductive) light-weight plate-shaped material has a plurality of windows. The windows are then filled with lead and the plate is laminated between two thin lead films to so obtain a composite structure that can serve as a basis for the bipole construction.

While not limiting the inventive subject matter, it is further especially preferred that the negative active material (NAM) is conductively coupled to the bipole and includes a grid or otherwise porous structure such that the grid or structure retains the NAM in contact with the bipole while preventing the NAM to be compressed. Preferably, such grid (e.g., skeletal structure) will advantageously have the same height as the NAM thickness at fully charged state. Therefore, the bipole can be compressed at both sides to a desirable pressure without negatively affecting the electrode performance. Void space filling and sealing of the bipole is then implemented using thermally conductive materials, and most preferably using an adhesive material to so form a path for heat dissipation. Moreover, it is generally preferred that such batteries further include a unidirectional valve that allows for independent venting of different quantities of gas from different cells in the battery. In such case, it is especially preferred that the unidirectional valves is a duckbill valve and vents into a common space from which the vented gases my then be released via one or more controlled valves.

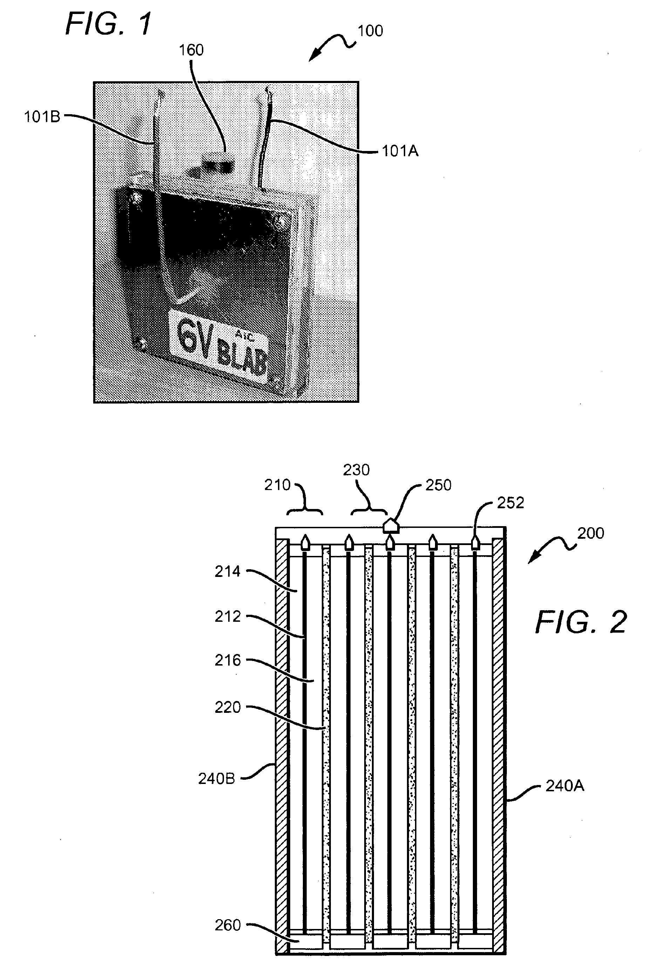

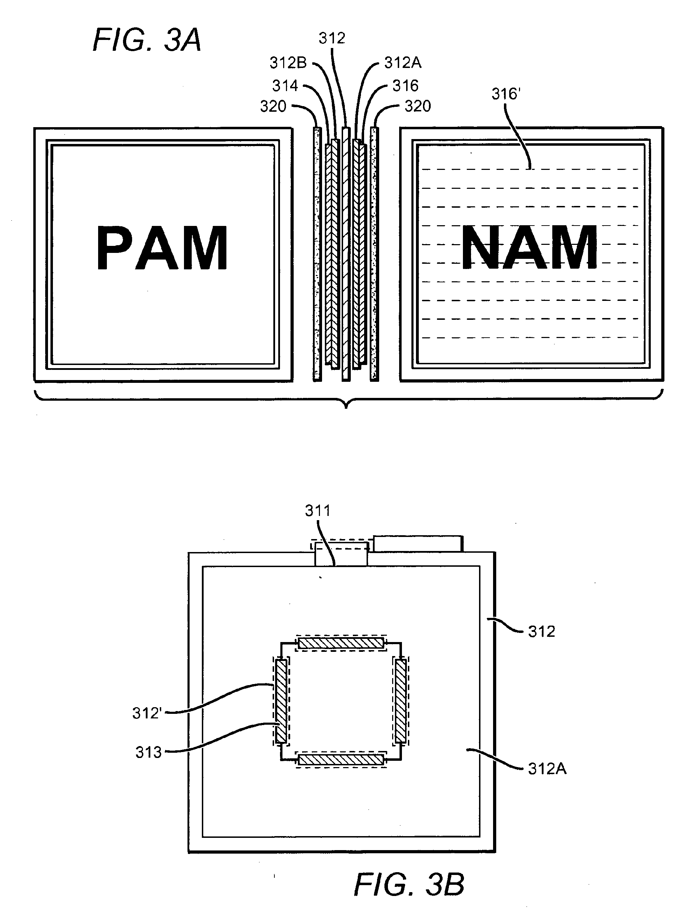

For example, **Figure 1** is a photograph of a valve regulated BLAB according to the inventive subject matter, where the battery 100 has a frame and endplates that together hold the cells together. A common vent valve 160 protrudes from the frame, and terminals 101A and 101B are electrically connected to the terminal monopole electrodes (not visible in this Figure). **Figure 2** is a more detailed and schematic illustration of another exemplary battery 200 that comprises a plurality of bipolar electrodes 210. Each of the bipolar electrodes 210 is configured as a quasi-bipolar electrode (see Figure 3B) and includes a preferably non-conductive carrier 212 to each side of which positive active material 214 and negative active material 216 are coupled via lead foils (not shown, see Figure 3A). Adjacent bipolar electrodes are separated by a compression resistant separator 220 that includes a gelled electrolyte, wherein the positive active material 214, the negative active material 216, and the compression resistant separator 220 that includes the gelled electrolyte form a cell 230 of the battery. The cells are assembled as a cell stack and the outer positive and negative active materials of the stack are electrically coupled to monopolar terminal electrodes 240A and 240B, respectively.

Each of the bipolar electrodes is preferably assembled with a frame to allow stacking of the electrodes together with the separators. In especially preferred aspects, the so formed cells will have void spaces that would normally have to be sealed to avoid leakage of the electrolyte from the cell, and migration of the electrolyte. However, as the electrolyte is retained in the separator in a gelled form, leakage is entirely avoided and the battery can be operated without sealing the cells. Moreover, as the separator is compression resistant, significant force can be exerted onto the terminal electrodes to so compress the cell stack and avoid positive electrode material shedding. Where desirable, at least some of the void spaces in the cells are then filed with a thermally conductive material 260 to facilitate heat transfer from the inside of the battery to the outside. Moreover, it is generally preferred that each cell is provided with a one-way valve 252 to allow for venting of gas (predominantly H₂) into a common space above the cells, which can then be vented via a common valve 250 to transfer the gas to a location outside the battery.

**Figure 3A** provides a more detailed schematic illustration of a bipolar electrode in which the left panel depicts one side of the electrode, the right panel depicts the opposite side of the electrode, and in which the central portion depicts a partially exploded side view. Here, the non-conductive carrier 312 is centrally located. Lead foils 312A and 312B are coupled to both sides of the carrier 312 (typically laminated), and positive active material 314 and negative active material 316 coupled to the lead foils 312A and 312B, respectively. Disposed within the negative active material is a compression resistant spacer structure 316' (typically configured as a grid, an irregularly shaped mesh, or other structure). First and second compression resistant separators 320 then cover the respective active materials.

**Figure 3B** shows another detail view of a quasi-bipole in which the non-conductive carrier 312 has openings 312' (dashed lines) that connect the respective surfaces of the plate-shaped carrier. Placed in the openings are lead elements 313 (or other conductive material) to so provide a current connection between the surfaces. Most preferably, lead foils 312A (and 312B, not shown) are laminated onto the carrier such that the lead elements electrically connect the lead foils on the opposing surfaces. Onto this assembly, negative and positive active materials are then applied (not shown). Most typically, the lead foils have a thickness that is greater than the thickness of the layers of negative and/or positive active materials.

Consequently, it should be appreciated that a bipolar (and most preferably a quasi-bipolar) lead acid battery can be produced in which a first and a second (quasi-) bipolar electrode are separated by a compression resistant separator in which an electrolyte is retained in a gelled form. Most preferably, such batteries will therefore include a quasi-bipolar electrode that is formed from a non-conductive carrier having a plurality of openings between a first and a second surface of the carrier, and wherein a conductive material is disposed in the openings. While not limiting to the inventive subject matter, a first and a second lead foil coupled to the first and second surfaces, respectively, and a layer of positive active material is coupled to the first foil, while a layer of negative active material is coupled to the second foil. It is still further generally preferred that the layer of negative active material also include a compression resistant spacer structure. Typically, contemplated batteries will have a first and second compression resistant separator coupled to the layer of positive active material and the layer of negative active material, respectively, wherein first and second compression resistant separators comprises the electrolyte in a gelled form.

The term "compression resistant separator" as used herein refers to a separator that can withstand mechanical compression of at least 30 kPa in a battery stack without loss of thickness or with a loss in thickness that is equal or less than 10%. Most typically, however, preferred compression resistant separators will withstand pressures of at least 50 kPa, and even more typically at least 100 kPa in a battery stack with a loss in thickness that is equal or less than 10%, more preferably equal or less than 5%, and most preferably equal or less than 3%. Consequently, preferred separators will comprise ceramic or polymeric materials suitable to withstand such pressures.

Moreover, it is particularly preferred that the separators according to the inventive subject matters also have the capability to retain the electrolyte while in contact with the active materials of the battery. Such capability is preferably achieved by retention of the electrolyte in a gelled form, wherein all known gelling agents are deemed suitable for use herein. For example, suitable gelling agents may be organic polymers or inorganic materials. In one particularly preferred aspect of the inventive subject matter, the electrolyte is immobilized in a micro-porous gel forming separator to so prevent conductive bridges between the positive and negative sides of the bipole and thus enables the bipolar battery to have a calendar and cyclic life comparable or better than that of a conventional lead acid battery.

Among other appropriate separators, the inventors have discovered that an AJS (acid jelling separator) (e.g., commercially available from Daramic, LLC) was not only capable of withstanding compressive forces but also capable of arresting migration of the electrolyte beyond the electrode boundary. Such advantage has not been recognized in the field of BLABs. Indeed, the inventors discovered that using such electrolyte immobilization a BLAB can be made that can continuously operate (*i.e*., over several charge/discharge cycles) without any sealing of the cells in the BLAB. The Daramic AJS is a synthetic micro-porous material filled with 6 to 8 wt% of dry pyrogenic silica. When the AJS is saturated with 1.28 s.g. (specific gravity) electrolyte, its silica component reacts with the latter to form a gel. Thus, it is contemplated that the electrolyte becomes immobilized by hydrogen bonding or Van-der-Waals forces of gel and/or by pores in the separator such that even in air nothing leaks. The limited mobility of the gel electrolyte prevents conductive bridges to occur between the positive and negative sides of the bipole. Further suitable materials are described in U.S. Pat. No. 6,124,059, which is incorporated by reference herein. However, in alternative aspects of the inventive subject matter, it is noted that all combinations of dimensionally stable materials (*i.e*., materials that can withstand compression at forces of 100 kPa at a loss of thickness of less than 10%, and more preferably less than 5%) with a gelled electrolyte are considered suitable for use herein.

It should be noted that heretofore known monopolar VRLA (valve regulated lead-acid) batteries do not have an issue with electrolyte bridges shunting the active materials (as no bipole electrode is present), and even if the separator in the monopolar configuration would leak, the battery would not be affected. In contrast, bipolar batteries have significant leakage issues that have not been reliably remedied with heretofore known technologies. Thus, immobilization of the electrolyte using AJS provides a unique and effective solution. Viewed from a different perspective, it should be appreciated that the AJS material in bipolar configurations immobilizes both the catholyte and the anolyte by gelling and retention in the micropores.

It should be especially appreciated that a further important advantage of the AJS material is its very limited dimensional yield under the compression force that are typically applied to the bipoles in lead acid batteries, and especially VRLAs. Unlike the ordinarily used AGM (fibrous absorbent glass mat) separators that often yield under compression, the AJS material allows compression the active materials to the desired pressure of 30 to 100 kPa, and even higher.

With respect to the compression of the separator materials it should be noted that it is almost impossible to apply the above noted compression forces during the manufacture of conventional monopolar batteries without destruction to the battery as in most monopolar batteries construction groups of monopoles are connected together with the separators already inserted. The groups of plates are then pushed into the cavity of a plastic box to make consecutive cells. Therefore, to push the electrodes into the box some clearance must be provided or friction would rub out some of the active material. Any pressure to keep the electrodes from shedding is thus generated during cycling as the box is dimensionally stable.

In the case of a BLAB pressure can be applied across all the cells after assembly before cycling. Each electrode plus its separators is assembled one on top of the other and pressed tight, and the packing pressure can be set using an external jig such that no shedding will occur during assembly and during cycling. It should be especially appreciated that shedding is most likely during charge when the active material shrinks (consider the volume occupied by lead sulfate compared to lead dioxide in the anode and lead compared to lead sulfate in the cathode). Therefore, the particular and heretofore unrecognized advantage of contemplated separator materials in BLAB batteries is that the materials do not yield under compression and/or drip electrolyte as the volume is changed due to change in thickness of the active material. Conventional gelling electrolytes fail to afford these advantages.

While such compression is desirable for positive active material (PAM, typically made from a combination of lead oxides and basic lead sulfates) to mitigate its shedding, it is detrimental to negative active material (NAM) by reducing its porosity and thickness. To circumvent at least some of the problems associated with NAM compression, the inventors have now incorporated a skeletal structure to which the NAM is coupled and which has contact with the negative electrode surface.

In particularly preferred aspects of the inventive subject matter, the skeletal structure comprises a grid that is made of a glass fiber mesh of the thickness equal to the thickness of the NAM. The negative paste is then filled into the cavities of the mesh even with its surface facing the separator (there is no over-pasting of the grid wires). Such design enables sheltering of the NAM from the compression exerted by the AJS. The AJS, while having a good interface with NAM, is stopped from exerting the force on the latter. Of course, it should be noted that numerous alternative skeletal structures are also suitable, including a perforated plate and other porous and structurally stable materials (typically non-conductive). Most preferably, the skeletal structure is made of a material that is stable in sulfuric acid and has the required mechanical properties (e.g., thermoplastic materials such as ABS, PP, or PC). The skeletal material will typically have the same thickness as the NAM at the 100% state of charge to so act as a buttress between a separator NAM contained in the void space of the skeletal material.

Consequently, and viewed from a different perspective, it is noted that the inventors also contemplate a method of reducing or even entirely eliminating migration of electrolyte in a bipolar lead acid battery by placing between a positive active material of a first bipolar electrode and a negative active material of a second bipolar electrode a compression resistant separator that comprises the electrolyte in a gelled form. Once the first and second bipolar electrodes and the separator are assembled or otherwise aligned to form a cell of the battery, mechanical pressure of at least 10 kPa is applied to the first and second bipolar electrode to so form a component of a BLAB. In most cases, higher pressure (e.g., between 20 kPa to 150 kPa, and even higher) is applied to allow for longer lifetime and reduce positive active material shedding.

It should further be noted that where the pressure is at or above 10 kPa, the negative active material can be protected from undesirable compaction. Most typically, such protection is achieved by including a compression resistant spacer structure such that the negative active material is disposed in void spaces of the spacer structure. There are numerous configurations and materials suitable for such spacer structure, and all of them are deemed suitable for use herein. However, it is especially preferred that the spacer structure is configured as a grid and manufactured from an acid resistant polymeric material. With respect to compression resistance of the spacer structure it is generally preferred that the spacer structure can withstand pressure of at least 100 kPa at a loss in thickness of less than 10%, and more preferably less than 5% (*supra*)*.*

It is further contemplated that in the batteries according to the inventive subject matter all known bipole electrodes can be used. However, it is generally preferred that the bipole electrode is configured as a quasi-bipole. Such configuration advantageously overcomes performance decay of heretofore known bipolar batteries due to pinhole formation in the bipoles. In one preferred embodiment, two conventional lead foils are laminated to a non-conductive substrate (e.g., made of a thin plastic material) on each side of the substrate. The lead foils are then electrically connected with each other through perforations in a plastic carrier as schematically illustrated in Figure 3B. For example, the perforations may be configured as slots located in a square pattern in the center of the substrate. The slots are then filled with the pure lead inserts of the same thickness as the substrate. Where desirable, the lead inserts can be coated on both sides with a thin layer of 50/50 lead/tin solder, and a thin layer of a battery type epoxy (or other adhesive) may be applied on both sides of the substrate. Two thin lead foils (e.g., 0.07 mm thickness) are positioned on respective sides of the substrate and the whole sandwich is placed between the heated platens of a press. Under 1000 to 3000 kPa compression at 120 °C the lead foils are reliably soldered to the inserts and so get laminated to the substrate. It should be particularly noted that such quasi-bipolar structures are not sensitive to pinholes in the positive lead foil and so enable use of thin pure lead foils which otherwise would be impossible to paste onto a conductive grid.

Remarkably, such quasi-bipoles have a rather uniform flow of current and low Ohmic resistance. Moreover, there is also an advantage of using pure lead foil on the positive side as pure lead has the best resistance to anodic corrosion. Furthermore, the compression of the battery stack does considerably mitigate the corrosion activity on the positive side due to a dense, fissure free protective layer of the lead dioxide formed on the surface of the lead. Among further advantages, the quasi-bipoles are very easy to assemble into a battery stack owing to the plastic substrate compatibility with epoxy.

It should still further be appreciated that as the leakage of electrolyte from the AJS has allowed a dry seal surface, voids around the bipoles can now be filled with thermally conductive materials. For example, suitable materials include industrially available adhesive materials such as epoxy, silicon, or acrylic, which are then primarily used to produce a heat dissipation path rather than for perimeter sealing. Many other temperature stable materials which work between -30 to +70 °C as adhesives are also suitable as fillers. The filler materials provide a good contact and hence conduction path for the heat generated by the inner components of the battery.

In yet another aspect of the inventive subject matter, it is noted that in traditional bipolar VRLA (valve regulated lead acid) batteries with thin cells it is often very difficult and costly to provide pressure relieve valves (PRV) for each cell as it is believed to be necessary for the oxygen recombination cycle. It was recently successfully proven by such VRLA batteries as Exide "Optima" that a single PRV can handle multiple cells connected in series and assembled into the common housing. The Optima battery has six wound 2 volts cells of monopolar design that are assembled into a common body with vent channels leading to a PRV. However, the inventors contemplate that such configuration may also be extended to bipolar configurations that may comprise at least 24 cells (or more likely, as many as 100 or more cells).

In an effort to implement regulated venting of a large number of cells, the inventors have used thin-walled small diameter plastic tubes, with each cell receiving a single tube. A small portion of each tube was protruding upward ending into a longitudinal channel of approximately 5 x 4 mm cross section molded in the battery lid. The length of the channel depended on the quantity of cells in the battery stack. That common channel was then connected to a single PRV. While this design proved to be functional a further improvement was introduced as follows. The top 2 to 4 mm of each tube were collapsed in a press with heated platens to form two flat walls touching each other to so form a duckbill valve. The so modified tube was able to perform as a one-way relieve feature for each of the cells by letting the excess gas out of the cell or cells into the channel while not allowing the gas from the channel to get into the other cells. This simple yet effective modification to the vent tubes has noticeably improved the voltage balance of the cells during charging of the high voltage bipolar battery. The flattened at the end thin wall plastic tubes acting as a one-way gas relieving feature by letting the excess gas out of the cell, while not allowing the gas to get into the other cells.

### Examples:

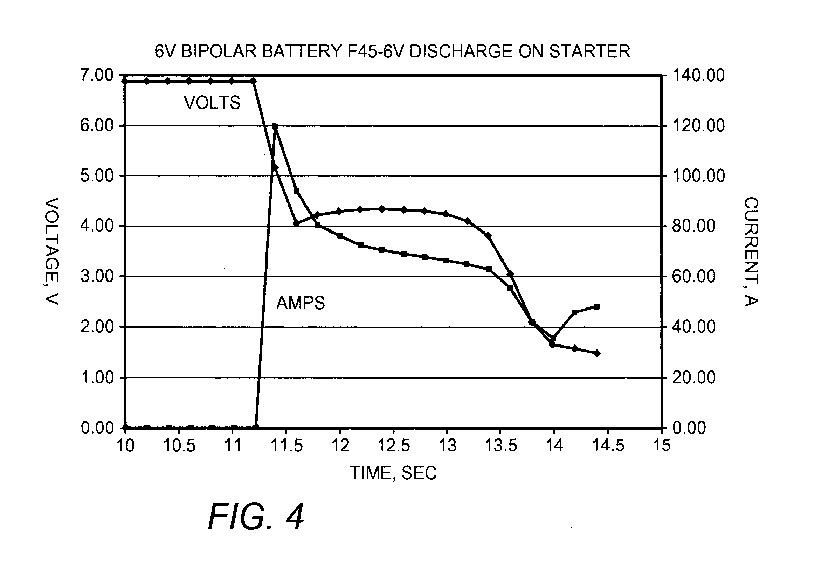

A VR-BLAB was constructed similar to that depicted in Figure 1 with an active area of 94x94 mm. Dry PAM per plate was 3.3 g at a thickness of 0.12 mm, and dry NAM per plate was 3.2 g at a thickness of 0.11 mm. The acid was sulfuric acid with a specific gravity of 1.28. The separator was a gel forming AJS with a thickness of 0.2 mm. The working electrolyte was sulfuric acid with a specific gravity of 1.280 g/cc (20 °C), and the battery had a single pressure relieve valve. Stack compression was 100 kPa. The substrate material Pb-Sn alloy had a thickness of 0.5 mm, the frame material was polycarbonate, and the end plates were formed from 5 mm aluminum plates. Figure 4 depicts exemplary results from a rapid discharge test on a starter motor with current and voltage as shown in the graph. As can be readily taken from the Figure, the battery provided significant current in a very short time at voltages as expected.

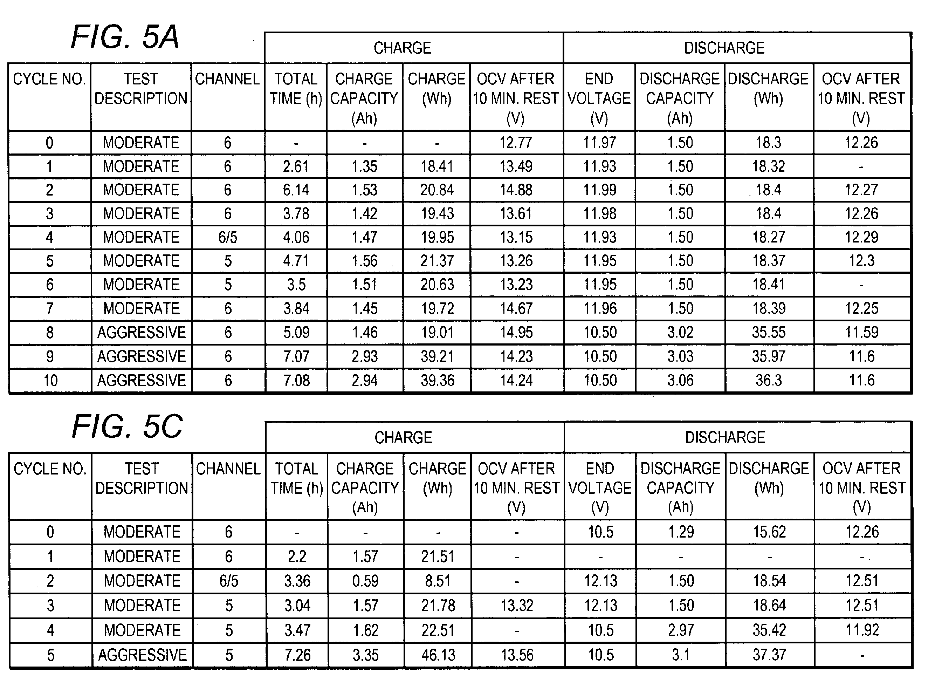

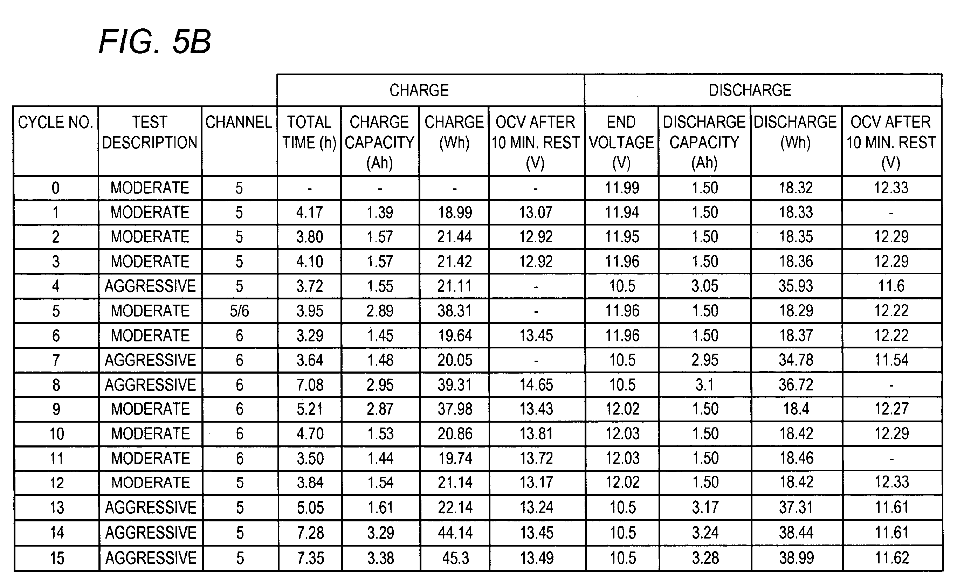

To test cycling efficiency, two different cycling programs were performed using two VR-BLABs according to the inventive subject matter and a comparative commercially available VRLA, wherein cycling was performed using a moderate profile and an aggressive profile. (a) Moderate cycling program was performed as follows: Charging in two stages, with the 1 st Stage at constant current 0.8A, voltage cutoff 14.4V, and the 2nd stage at constant voltage 14.4V until capacity equals 1.57 Ah. Charging was followed by a 10 min rest period. Discharge was at 1A for 1.5h with voltage cutoff at 10.5V, and cycling was stopped at 2.1 Ah (70% rated capacity at C/3). (b) Aggressive cycling program was performed as follows: Charging in two stages, with the 1st stage at constant current 0.9A, voltage cutoff 14.7V, and the 2nd stage at constant voltage 14.7V, time cutoff 4.5h, followed by 10 min rest period. Discharge was at 1.7A until voltage cutoff at 10.5V, and cycling was stopped at 2.45 Ah (70% rated capacity at C/2). The results for two BLABs according to the inventive subject matter are depicted in the tables of **Figure 5A-5C****,** in which results for 189-1A (Figure 5A) and 189-1B (Figure 5B) are results from the BLAB described herein, while results for 189-3 (Figure 5C) are shown for a commercially available 12V, 4Ah battery (McMaster Carr Batteries). As can be readily seen from the Figures, the VR-BLABs had comparable performance and maintained power characteristics over the tested cycles.

However, it should be noted that the batteries according to the inventive subject matter have a significantly higher energy density. Most typically, contemplated batteries will achieve power densities of at least 35 Wh/kg, more typically at least 38 Wh/kg, and most typically at least 40 Wh/kg. In contrast, current monoblock technology will allow for energy densities of 35 Wh/kg in a best-case scenario.

Thus, specifc embodiments and applications of improved bipolar lead acid batteries have been disclosed. It should be apparent, however, to those skilled in the art that many more modifications besides those already described are possible without departing from the inventive concepts herein. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

## Claims

1. A method of reducing migration of an electrolyte in a bipolar lead acid battery, the method comprising the steps of:
placing between a positive active material of a first bipolar electrode and a negative active material of a second bipolar electrode a compression resistant separator that comprises the electrolyte in a gelled form; and
aligning the first and second bipolar electrodes and the separator to form a cell of the battery, and applying mechanical pressure of at least 10 kPa to the first and second bipolar electrode.

2. The method of claim 1 wherein the bipolar electrode is configured as a quasi-bipolar electrode.

3. The method of claim 2 wherein the bipolar electrode comprises a carrier having a first and a second surface, and a first and a second lead foil coupled to the first and second surfaces, respectively.

4. The method of claim 1 wherein the compression resistant separator comprises a synthetic microporous material filled with pyrogenic silica.

5. The method of claim 4 wherein the negative active material further comprises a compression resistant spacer structure.

6. The method of claim 5 wherein the pressure is between 20 kPa to 150 kPa.

7. The method of claim 1 wherein the cell comprises a void space between the first and second bipolar electrodes and filling a thermally conductive material into a section of the void space.

8. The method of claim 7 further comprising a step of coupling a one-way valve to the cell to thereby allow venting of a gas from the cell.

9. A bipolar lead acid battery comprising a first bipolar electrode and a second bipolar electrode that are separated by a compression resistant separator that is resistant to a mechanical pressure of at least 10 kPa and that includes an electrolyte in a gelled form, wherein the compression resistant separator comprises a synthetic microporous material filled with pyrogenic silica, and wherein the electrolyte is immobilized by hydrogen bonding or Van-der-Waals forces of gel and/or by pores in the separator, and wherein the battery is continuously operable without any sealing of the cells in the battery.

10. The bipolar battery of claim 9 wherein the compression resistant separator comprises an inert filler material.

11. The bipolar battery of claim 9 wherein a negative active material of the first electrode and a positive active material of the second electrode and the compression resistant separator form a cell, and wherein the electrolyte is gelled to a degree sufficient to allow operation of the battery without sealing of the cell.

12. The bipolar battery of claim 11 wherein the cell comprises a void space between the first and second bipolar electrodes and wherein a thermally conductive material is disposed in at least a section of the void space.

13. The bipolar battery of claim 12 further comprising a one-way valve coupled to the cell to thereby allow venting of a gas from the cell.

14. The bipolar battery of claim 9 wherein at least one of the electrodes is a quasi-bipolar electrode.

15. The bipolar battery of claim 14 wherein the quasi-bipolar electrode comprises a non-conductive carrier having a plurality of openings formed between a first and a second surface of the carrier, and a conductive material disposed in the plurality of openings, and wherein the quasi-bipolar electrode further comprises a first and a second lead foil coupled to the first and second surfaces, respectively.

## Patentansprüche

1. Ein Verfahren zum Reduzieren der Migration in einem Elektrolyten in einer bipolaren Bleisäure-Batterie, wobei das Verfahren die folgenden Schritte aufweist:
Anordnen zwischen einem positiven, aktiven Material einer ersten bipolaren Elektrode und einem negativen, aktiven Material einer zweiten bipolaren Elektrode, ein kompressionsbeständiges Trennmittel, welches den Elektrolyten in einer gelierten Form aufweist; und
Ausrichten der ersten und zweiten bipolaren Elektroden und des Trennmittels zur Bildung einer Zelle der Batterie und Anlegen von mechanischen Druck von mindestens 10 kPa an die erste und zweite bipolare Elektrode.

2. Das Verfahren nach Anspruch 1, wobei die bipolare Elektrode als eine quasi-bipolare Elektrode konfiguriert ist.

3. Das Verfahren nach Anspruch 2, wobei die bipolare Elektrode einen Träger mit einer ersten und mit einer zweiten Oberfläche aufweist, und wobei eine erste und eine zweite Bleifolie mit den ersten bzw. den zweiten Oberflächen gekoppelt ist.

4. Das Verfahren nach Anspruch 1, wobei die kompressionsbeständigen Trennmittel ein synthetisches mikroporöses Material aufweisen und zwar gefüllt mit einem pyrogenen Siliziumdioxid.

5. Das Verfahren nach Anspruch 4, wobei das negative, aktive Material ferner eine kompressionsbeständige Beabstandungsstruktur aufweist.

6. Das Verfahren nach Anspruch 5, wobei der Druck zwischen 20 kPa bis 150 kPa liegt.

7. Das Verfahren nach Anspruch 1, wobei die Zelle einen Hohlraum aufweist, zwischen den ersten und zweiten bipolaren Elektroden und wobei ein thermisch leitendes Material in einen Abschnitt des Hohlraums eingefüllt wird.

8. Das Verfahren nach Anspruch 7, wobei ferner ein Schritt des Kuppelns eines Einwegventils mit der Zelle vorgesehen ist, um dadurch das Belüften eines Gases von der Zelle zu gestatten.

9. Eine bipolare Bleisäure-Batterie, die folgendes aufweist: eine erste bipolare Elektrode und eine zweite bipolare Elektrode, die durch ein kompressionsbeständiges Trennmittel getrennt sind, welches beständig gegenüber einem mechanischen Druck von mindestens 10 kPa ist, und dass einen Elektrolyten in einer Gelform aufweist, wobei das kompressionsbeständige Trennmittel ein synthetisches mikroporöses Material gefüllt mit pyrogenen Siliziumdioxid aufweist und wobei ferner der Elektrolyt unbeweglich gemacht ist, durch Wasserstoffbindung oder Van-der-Waals-Kräfte des Gels und/oder durch Poren in dem Trennmittel, und wobei die Batterie kontinuierlich betreibbar ist, ohne irgendeine Dichtung der Zellen in der Batterie.

10. Die bipolare Batterie nach Anspruch 9, wobei das kompressionsbeständige Trennmittel in inertes Füllmaterial aufweist.

11. Die bipolare Batterie nach Anspruch 9, wobei ein negatives aktives Material der ersten Elektrode und ein positives aktives Material der zweiten Elektrode und das kompressionsbeständige Trennmittel eine Zelle bilden, und wobei der Elektrolyt in einem Ausmaß geliert ist, ausreichend, um den Betrieb der Batterie zu gestatten ohne die Abdichtung der Zelle.

12. Die bipolare Batterie nach Anspruch 11, wobei die Zelle ein Hohlraum zwischen den ersten und zweiten bipolaren Elektroden aufweist, und wobei ein thermisch leitendes Material in mindestens einem Abschnitt des Hohlraums angeordnet ist.

13. Die bipolare Batterie nach Anspruch 12, wobei ferner ein Einwegventil mit der Zelle gekoppelt ist, um dadurch die Belüftung eines Gases aus der Zelle zu gestatten.

14. Die bipolare Batterie nach Anspruch 9, wobei mindestens eine der Elektroden eine quasi bipolare Elektrode ist.

15. Die bipolare Batterie nach Anspruch 14, wobei die quasi bipolare Elektrode einen nicht-leitenden Träger aufweist, und zwar mit einer Vielzahl von Öffnungen, die darin geformt sind, zwischen einer ersten und einer zweiten Oberfläche des Trägers, und wobei ferner ein leitendes Material in der Vielzahl von Öffnungen angeordnet ist, und wobei die quasi bipolare Elektrode ferner eine erste und eine zweite Bleifolie aufweisen und zwar gekuppelt mit den ersten bzw. den zweiten Oberflächen.

## Revendications

1. Procédé pour réduire la migration d'un électrolyte dans une batterie au plomb-acide, le procédé comprenant les étapes suivantes :
placer entre un matériau actif positif d'une première électrode bipolaire et un matériau actif négatif d'une deuxième électrode bipolaire, un séparateur résistant à la compression qui comprend l'électrolyte sous forme de gelée ; et
aligner les première et deuxième électrodes bipolaires et le séparateur pour former une cellule de la batterie, et appliquer une pression mécanique d'au moins 10 kPa aux première et deuxième électrodes bipolaires.

2. Procédé selon la revendication 1, dans lequel l'électrode bipolaire est agencée sous la forme d'une électrode quasi bipolaire.

3. Procédé selon la revendication 2, dans lequel l'électrode bipolaire comprend un support ayant une première et une deuxième surface, et une première et une deuxième feuille de plomb couplées aux première et deuxième surfaces, respectivement.

4. Procédé selon la revendication 1, dans lequel le séparateur résistant à la compression comprend un matériau microporeux synthétique rempli de silice pyrogénique.

5. Procédé selon la revendication 4, dans lequel le matériau actif négatif comprend en outre une structure d'espaceur résistant à la compression.

6. Procédé selon la revendication 5, dans lequel la pression est comprise entre 20 kPa et 150 kPa.

7. Procédé selon la revendication 1, dans lequel la cellule comprend un espace vide entre les première et deuxième électrodes bipolaires, et un remplissage avec un matériau conducteur thermique dans une section de l'espace vide.

8. Procédé selon la revendication 7, comprenant en outre une étape consistant à coupler une soupape monodirectionnelle à la cellule pour permettre ainsi une ventilation des gaz provenant de la cellule.

9. Batterie plomb-acide bipolaire comprenant une première électrode bipolaire et une deuxième électrode bipolaire qui sont séparées par un séparateur résistant à la compression qui est résistant à une pression mécanique d'au moins 10 kPa et qui comprend un électrolyte sous forme de gelée, dans laquelle le séparateur résistant à la compression comprend un matériau microporeux synthétique rempli de silice pyrogénique, et dans laquelle l'électrolyte est immobilisé par une liaison hydrogène ou par des forces de Van-der-Waals de gel et/ou par des pores dans le séparateur, dans laquelle la batterie peut être actionnée de façon continue sans fermer de façon étanche les cellules dans la batterie.

10. Batterie bipolaire selon la revendication 9, dans laquelle le séparateur résistant la compression comprend un matériau de remplissage inerte.

11. Batterie bipolaire selon la revendication 9, dans laquelle un matériau actif négatif de la première électrode et un matériau actif positif de la deuxième électrode et le séparateur résistant à la compression forment une cellule, et dans laquelle l'électrolyte est gelé à un degré suffisant pour permettre le fonctionnement de la batterie sans fermer de façon étanche la cellule.

12. Batterie bipolaire selon la revendication 11, dans laquelle la cellule comprend un espace vide entre la première et la deuxième électrode bipolaires et dans laquelle un matériau conducteur thermique est disposé dans au moins une section de l'espace vide.

13. Batterie bipolaire selon la revendication 12, comprenant en outre une soupape monodirectionnelle couplée à la cellule pour permettre ainsi une ventilation des gaz provenant de la cellule.

14. Batterie bipolaire selon la revendication 9, dans laquelle au moins l'une des électrodes est une électrode quasi bipolaire.

15. Batterie bipolaire selon la revendication 14, dans laquelle l'électrode quasi bipolaire comprend un support non conducteur ayant une pluralité d'ouvertures formées entre une première et une deuxième surface du support, et un matériau conducteur disposé dans la pluralité d'ouvertures, et dans laquelle l'électrode quasi bipolaire comprend en outre une première et une deuxième feuille de plomb couplées aux première et deuxième surfaces, respectivement.
